# EUROPÄISCHE PATENTANMELDUNG

(11) **EP 1 000 851 A2**
(43) Veröffentlichungstag der Anmeldung: **17.05.2000**
(21) Anmeldenummer: 99120018.9
(22) Anmeldetag: 15.10.1999
(51) Int. Cl.: B63B 21/54

(54) **Vorrichtung zur vorläufigen Sicherung eines Bootes an einer Boje, Kaimauer oder dergleichen**

(30) Priorität: 11.11.1998 DE 19852021
(71) Anmelder: MK Montagebau, Christa Kirschbaum, 82436 Eglfing (DE)
(72) Erfinder: Kirschbaum, Walter, 82436 Eglfing (DE)
(74) Vertreter: Lewald, Dietrich, Dipl.-Ing.

(57) **Zusammenfassung**

Die Erfindung betrifft eine Vorrichtung zum vorläufigen Sichern eines Bootes in Form eines Karabiners, dessen bewegliche in die Schließstellung durch Federbeaufschlagung dauernd vorgespannte Lasche (16) fenbetätigt ist und sich dadurch vom Maul (21) löst.

## Beschreibung

Die Erfindung betrifft eine Vorrichtung zur vorläufigen Sicherung eines Bootes, beispielsweise an einer Boje oder am Ring einer Kaimauer.

Bisher ist es üblich, daß die Boje zum Festmachen eines Bootes, mit dem Bootshaken aus dem Wasser gefischt wird, oder eine Person über den Bug hinunter greift, um die Boje zu erreichen. Ziel ist es, sofort eine feste Verbindung zwischen Boot und Boje herzustellen.

Das Gleiche gilt für eine feste Verbindung zwischen Boot und Kaimauer oder einem Steg.

Eine erhebliche Schwierigkeit und Gefahr besteht darin, wenn keine Person zur Leinenübergabe vorhanden ist und somit ein Besatzungsmitglied das Boot per Sprung auf die Kaimauer verlassen muß, um dort die Leine zu übernehmen.

Gelöst wird diese Aufgabe mit einer Vorrichtung der eingangs genannten Art durch einen Karabiner, der in einem Kastenprofil (im folgenden auch als Öffner bezeichnet) steckt, welches am Ende einer Stange bzw. der gegenüber liegenden Seite eines Bootshakens befestigt ist, dessen bewegliche in Schließstellung durch Federbeaufschlagung dauernd vorgespannte Lasche auf Zug fernbetätigbar ist und sich dadurch vom Maul löst, also öffnet.

Vorzugsweise wird die Lasche gegen die Federkraft durch das Hineinziehen in das Kastenprofil mittels der Festmacherschot betätigt.

Insbesondere zur Befestigung an den Ringen der Kaimauern kann der feste Teil des Karabinerhakens in ein nashornförmiges, dem Hochklappen der Ringe dienendes Ende übergehen.

Liegt der Ring im Maul des Karabiners, wird dessen Lasche durch Federdruck, die noch gegen die geschlitzte Seite des Kastenprofils wirkt geschlossen, in dem man den Stab mit Kastenprofil von den Gleit- und Zentrierbacken zieht.

Günstig ist es, wenn durch Drehen des Bootshakens eine Freigabe des Karabiners erfolgen kann.

Beispielsweise Ausführungsformen der Erfindung sollen nun mit Bezug auf die beiliegenden Zeichnungen näher erläutert werden, in denen
- **Figur 1**: eine Ansicht auf den Stab mit Öffner und offenen Karabiner ist;
- **Figur 2**: ist eine Draufsicht auf die Ausführungsform der Figur 3;
- **Figur 3**: ist eine Darstellung ähnlich Figur 1 im geschlossenen Zustand ohne Stab und Öffner und
- **Figur 4**: eine Dreiseitenansicht des Öffners.

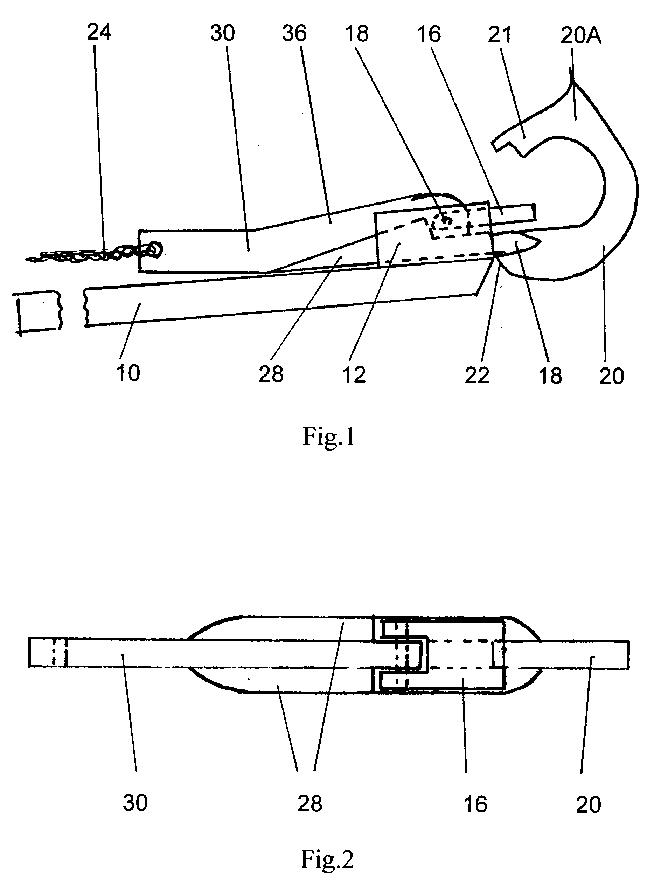

In Figur 1 erkennt man bei 10 eine Stange oder Bootshaken, an der bzw. an dem fest ein Kastenprofil 12, ist gleich Öffner, sitzt, dessen dem Stab abgewendete Seite ist bei 14 geschlitzt. Die Schließlasche 16 ist bei 18 gelenkig am Karabiner 20 angebracht. Der feste Teil des Karabiners 20 (Karabinermaul) geht in mit seinem Stegteil 30 in die Gleit und Zentrierbacken 28, die eine Verlängerung des rückseitigen Teils des Mauls bilden, über. Der Stegteil wird gebildet aus den in Längsrichtung beidseitig parallel verlaufenden Gleit- und Zentrierbacken 28. Mittig von den Zentrierbacken 28 auf der der Haltestange 10 abgewendeten Seite steht eine längsverlaufende Führungsrippe 36 vor, die nach Aufnahme im Schlitz 14 des Kastenprofils 12 geführt ist. Nach einer Ausführungsform durchsetzt der Gelenkstift 18 die Schließlasche 16, an dem auch die Feder (nicht gezeichnet) angreift, die Führungsrippe 36 an deren vorderem Ende. Die Feder ist so also in an sich bekannter Weise zwischen Führungsrippe 36 und Schließlasche 16 gespannt.

Aufschiebbar über die beiden Gleit- und Zentrierbacken 28 ist das geschlitzte Kastenprofil 12 das am Ende einer Stange oder eines Bootshakens 10 angebracht ist. Die Schließlasche 16 ist durch Federbeaufschlagung in die Schließstellung (in an sich bekannter Weise bei einem Karabiner) vorgespannt. Die Schließlasche 16 ist durch Verschieben des Kastenprofils 12 betätigbar. Ein Teil des Karabinerhakens 20 geht in ein nashornförmiges, dem Hochklappen von Ringen an Kaimauern insbesondere dienendes Ende 20A über.

### Die Arbeitsweise ist die folgende:

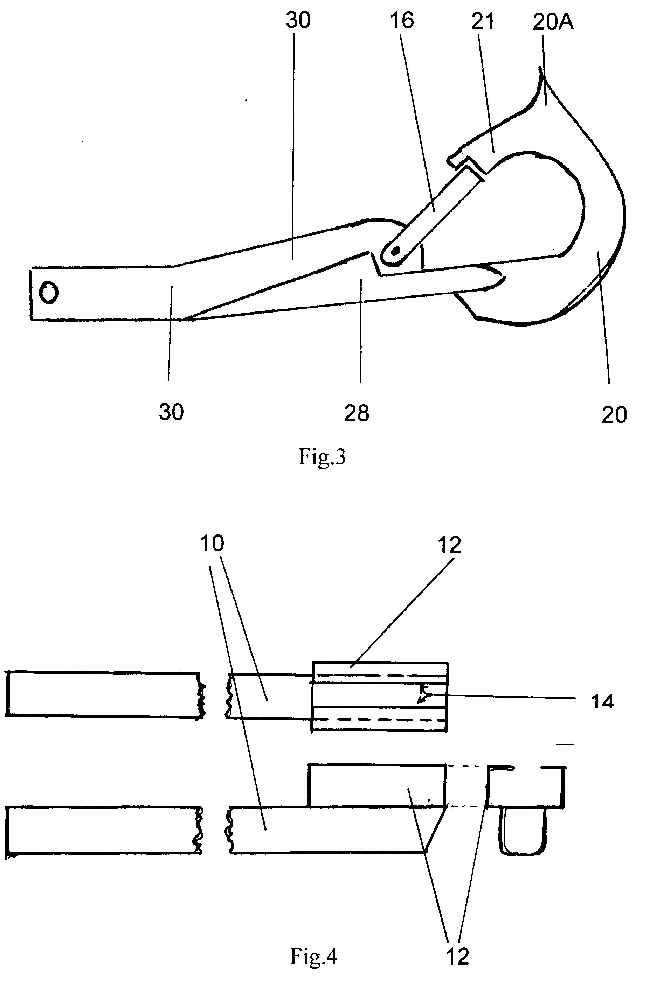

Die erwähnten beiliegenden Figuren zeigen u.a. verschiedene Stellungen von Betätigungsstange mit Öffner und Karabiner. So zeigt
Figur 1 einen Karabiner samt Öffner im geöffneten Zustand; Figur 2 zeigt eine Draufsicht auf den Karabiner, auf die Lasche so wie auf die Gleit- und Zentrierbacken; Figur 3 zeigt den Karabiner im geschlossenen Zustand und Figur 4 ist die Dreiseitenansicht des Öffners.

Der beispielsweise am Ende eines Rundstabes 10 befestigte Öffner 12 wird über die Gleit- und Zentrierbacken 28 geschoben, und zwar soweit, bis die Verschlußlasche 16 des Karabiners 20 ganz geöffnet hat. Der Öffner (Teil 12, 14) wird an der unteren Ausbuchtung am Anschlag 22 gestoppt. Wird das Seil parallel zum Rundstab gespannt, so bilden Öffner und Karabiner eine Einheit. Wird beispielsweise ein Ring an einer Kaimauer von unten aufgenommen, so erfolgt dies mit der nashornähnlichen Spitze 20A am Maul 21 des Karabiners 20. Dabei kann der Ring so weit über den Karabiner gleiten, bis er in das durch den Öffner geöffnete Maul 21 fällt.

Beim Zurückziehen des Öffners 12 Richtung Seil 24 kann die Feder ihre Wirkung ausüben und die Lasche 16 gegen das Maul 21 des Karabiners 20 schließen. Das Boot ist gesichert. Durch Zurückziehen des Kastenprofils 12 kommt der Karabiner frei.

Beim Festmachen entfällt das Springen auf die Kaimauer, was das Verletzungsrisiko enorm herabsetzt. Das Aufnehmen der Boje am Heck über die Badeplattform im Gefahrenbereich der Schraube entfällt.

Besonders vorteilhaft ist die Maßnahme nach der Erfindung beim Lösen von der Boje oder vom Ring. Das Seil 24 wird gespannt, um den Karabiner 20, der am Ring oder an der Boje hängt, zu stabilisieren und auszurichten. Nun wird der Öffner 12 zunächst über die Gleit- und Zentrierbacken, dann gegen den Federdruck der Schließlasche 16 über die selbige geschoben und öffnet diese. Ein Anschlag 22 stoppt eine weitere Bewegung. Der Ring kann aus dem Karabiner ausgeklinkt werden. Durch Drehung des Karabinerhakens, größer 90°, kommt der Karabiner 20 vom Ring frei. Die Maßnahme nach der Erfindung wirkt besonders beim Lösen. Diese Aufgabe hatte bisher eine Begleitperson, die mit einem Fuß am Heck des Schiffes, mit dem anderen auf der Kaimauer stand und bei Entfernung des Schiffes von der Kaimauer nur mit viel Akrobatik einen Sturz ins Wasser vermeiden konnte.

Durch die Maßnahme nach der Erfindung kann die direkte Verbindung zwischen Boot und Ring an der Kaimauer bzw. Boje ohne Anstrengung und Risiko vom Boot aus fernbedienbar gelöst werden.

## Patentansprüche

1. Vorrichtung zum vorläufigen Sichern eines Bootes in Form eines Karabiners, dessen bewegliche in die Schließstellung durch Federbeaufschlagung dauernd vorgespannte Lasche (16) fernbetätigt ist und sich dadurch vom Maul (21) löst.

2. Vorrichtung nach Anspruch 1, dadurch gekennzeichnet, daß die Lasche (16) gegen die Federkraft durch ein Seil (24) und einen Öffner (12) betätigbar ist.

3. Vorrichtung nach einem der vorhergehenden Ansprüche, dadurch gekennzeichnet, daß die Karabinerlasche (16) am Gelenkpunkt (18) durch einen Öffner 12 betätigbar ist.

4. Vorrichtung nach einem der vorhergehenden Ansprüche, dadurch gekennzeichnet, daß der Öffner (12) im Bereich des Gleit- und Zentrierstückes mit der sich dabei öffnenden Lasche (16) verschiebbar ist.

5. Vorrichtung nach einem der vorhergehenden Ansprüche, dadurch gekennzeichnet, daß der feste Teil (20) des Karabinerhakens in ein nashornförmiges dem Hochklappen der Ringe, insbesondere an Kaimauern, dienendes Ende (20A) übergeht.

6. Vorrichtung nach einem der vorhergehenden Ansprüche, dadurch gekennzeichnet, daß durch Verdrehen des Bootshakens eine Freigabe des Karabiners erfolgt.
